# EUROPEAN PATENT APPLICATION

(11) **EP 1 138 991 A1**
(43) Date of publication of application: **04.10.2001**
(21) Application number: 01301883.3
(22) Date of filing: 01.03.2001
(51) Int. Cl.: F16K 17/04

(54) **Safety valve**

(30) Priority: 30.03.2000 EP 00302659
(71) Applicant: Bestobell Valves, Sheffield S4 7UR (GB)
(72) Inventor: Fretwell, Kevin, c/o Bestobell Valves, Sheffield S4 7UR (GB)
(74) Representative: Haley, Stephen

(57) **Abstract**

A pressure relief safety valve that comprises a sealing seat (3), a two-part valve member (4), and biassing means for biassing the valve member (4) into engagement with the seat (3). The two-part valve member (4) comprises a first member (5) slidably retained in a second member (6) and the biassing means comprises a first biassing member (7) for biassing the first valve part (5) into engagement with the seat (3) and a second biassing member (8) for biassing the second valve part (6) toward the valve seat wherein the first and second biassing means are configured such that the first biassing means (7) generates a force that is higher than the second biassing means (8).

## Description

This invention relates to a pressure relieving safety valve.

Such pressure relieving safety valves are well known and are used in many different areas of technology to ensure that excess fluid pressure build-up in a system can be relieved by venting off of fluid from the system when required. Examples of the areas in which such safety valves are employed include steam generating systems and chemical processing systems in refineries.

Traditional pressure relieving safety valves operate by having a sealing ring on a seat, the sealing ring being urged into position on a seat by a biassing member. When excess fluid pressure builds up in the system to which the valve is attached the ring is as urged away from a sealing seat against the force of the biassing member and fluid release from the safety valve. Such an arrangement has problems. It is based upon the kinetic energy of the fluid holding the ring in an open position. As this can vary, however, the amount of opening of the ring varies and it is difficult to control flow through the safety valve, and particularly to achieve the valve tolerances required in modern systems. For example, if the kinetic energy of the fluid is high and any force against the ring is also high then good flow capacity will be obtained, but there can be problems associated with ensuring that the valve closes again at a suitable pressure.

The present invention seeks to overcome this and other problems.

According to the present invention there is provided a pressure relief safety valve that comprises:
a sealing seat;
a two-part valve member; and
biassing means for biassing the valve member into engagement with the seat, wherein the two-part valve member comprises a first member slidably retained in a second member, the biassing means comprises a first biassing member for biassing the first valve number into engagement with the seat and a second biassing member for biassing the second valve number toward the valve seat, the first and second biassing means are configured such that the first biassing means generates a force that is higher than the second biassing means, and wherein the second valve member has a lip formed thereon, the lip surrounding the seat such that the area through which fluid can flow when the valve is opened is predetermined.

The first and second valve numbers may both have a circular cross section. The second valve member may have a retaining member for restricting the extent of movement of the first valve number within it in the direction away from the sealing seat. The biassing means may comprise two or more springs.

The seat may also have a lip, which sits, in use, within the lip of the second valve member.

The valve may have an outer housing which, in use, is rigidly attached to the valve seat, the first and second members of the valve member sliding therein, with the second member having a corresponding stop member on the valve housing for limiting movement thereof in a direction away from the sealing seat.

The ratio of the relative forces generated by the first and second biassing means may be in the range of 20:1 to 4:1, but preferably 8:1 to 6:1

By providing a two-part valve member, with each part of the valve member having a corresponding biassing means, it is possible to select to a high degree of accuracy the pressure at which the valve operates, but also the flow rate through the valve as the pressure falls back below the trigger pressure for the valve. By provision of a lip on the second valve member which surrounds the seat, it is possible to define simply and easily an area through which fluid can flow in use. This pre-definition of flow area ensures that back pressure between the seat and valve member can be controlled accurately so that closure of the valve is controlled with precision and unwanted closure vibration removed. It also means that a valve can be provided with a high lift and flow rate.

One example of the present invention will now be described with reference to the accompanying drawings, in which:
Figure 1 is a side cross-sectional view of an example of the present invention in a closed position; and
Figure 2 is a side cross-sectional view of the example of figure 1 in a fully open position.

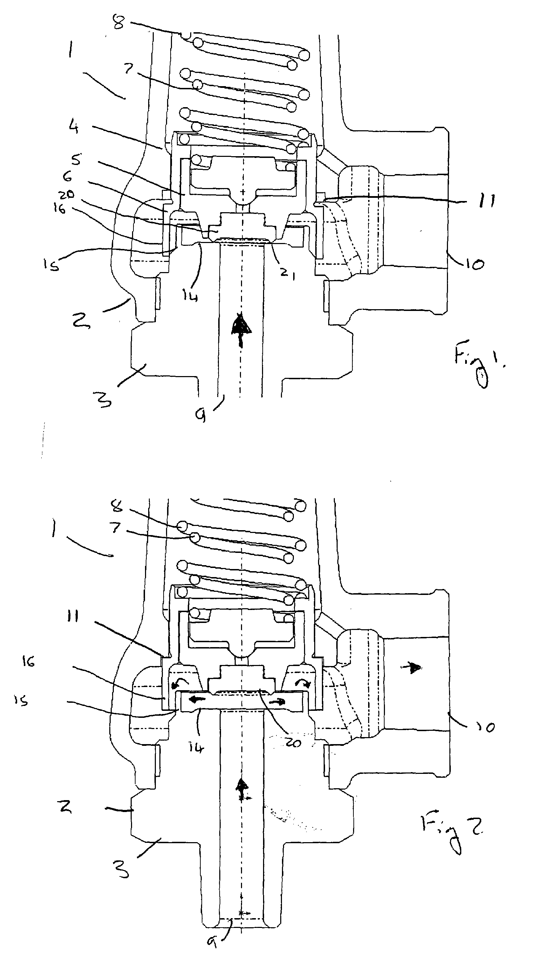

Referring to figure 1, a valve 1 according to the invention has a housing 2, which may be formed from one or more components. As part of the housing 2 there is formed a valve seat 3 which has a raised lip 15 around the outer periphery of its face 14. Engaging with the valve seat 3 is a valve member 4 which comprises a first valve member part 5 slidably retained within a second valve member part 6. The first valve member part 5 has a removable sealing disc 20 contained therein, the disc 20 having a sealing rib 21. The disc can readily be replaced when worn for ease of maintenance. The second valve member part 6 is slidably retained within the valve housing 2 and has a lip 16 which surrounds the seat lip 15 even in an upper position.

The first valve member part 5 is urged into engagement with the valve seat 3 by a first biassing spring 7. The second valve member part 6 is urged into engagement with the first valve member part 5 and in the direction of the valve seat 3 by a second biassing spring 8 and a seal formed by seat lip 21. In the position shown in figure 1 gas entering the valve via port 9 is prevented from passing through to an exit 10 in the valve by the biassing action of the spring 7, 8 on the valve member 4.

When pressure in the port 9 exceeds a value that generates a force greater than that of the combined force of the springs 7 and 8, the valve member 4 is lifted out of engagement with the seat 3 until the outer edge of the second valve member 6 engages with a stop 11 on the housing 2 of the valve 1. In this position the valve is fully open and fluid is released through the exit port 10 by the valve 1, reducing pressure in the system attached to the port 9. Up to this point in the operation the valve is in a manner similar to prior art devices, but the stop 11 insures that a very large upward forces can be tolerated by the valve mechanism (and particular the second spring 8) because the upward force is resisted by the stop 11.

As fluid pressure in the port 9 reduces the first valve part 5 is urged downward by the first biassing spring 7 toward the valve seat 3. This reduces the flow rate of fluid in the valve one by reducing the open area in the valve. The second valve part 6, does not, initially, move downward, because the biassing force generated by the second biassing spring 8 is less than that generated by the first biassing spring 7 in a range of preferably 20 to 1 to 4 to 1. Eventually, the pressure in the fluid reduces to such an extent that the first valve part 5 engages with the seat 3, closing the valve 1 and allowing the second valve part 6 to reciprocate towards to the valve seat 3 and the position shown in figure 1.

To some extent the ratios listed above are determined by the relative shapes of the faces 13, 14 of the first and second valve part 5, 6 and seat 3. If these are altered so that the area proportions and relative receiving directions are changed then escaping fluid will generate differing forces on each and the ratio may have to be changed. The most significant feature in terms of determining control of closure of the valve is, however, the provision of the lip 15 on the second valve part 6. This lip, which surrounds the seat 3 and the seat lip 15 formed thereon, defines a regular area, which can readily be defined by the simple relationship between the outer diameter of the seat lip 15 and inner diameter of the second valve part lip 16 and controls the back pressure in the region of the seat 3 and the first and second parts valve 5, 6. Because of the ability to determine this area easily, it is therefore a straightforward matter to design adequate back pressure to provide statement valve closure whilst maintaining a high lifting rate upon opening and a high overall flow rate. Furthermore, it means that the overall characteristics of the valve can be adapted quite readily simply by providing a second valve part 6 with a lip 16 of a different internal diameter.

## Claims

1. A pressure relief safety valve that comprises:
a sealing seat;
a two-part valve member; and
biassing means for biassing the valve member into engagement with the seat, wherein the two-part valve member comprises a first member slidably retained in a second member, the biassing means comprises a first biassing member for biassing the first valve member into engagement with the second valve member toward the valve seat, the first and second biassing means being configured such that the first biassing means generates a force that is higher than the second biassing means and wherein the second valve member has a lip formed thereon, the lip surrounding the seat such that the area through which fluid can flow when the valve is opened is predetermined.

2. A valve according to claim 1, wherein the first and second valve members both have a circular cross section.

3. A valve according to claim 1 or 2, where the second valve member has a retaining member for restricting the extent of movement of the first valve member within it in the direction away from the sealing seat.

4. A valve according to any of claims 1 to 3, wherein the biassing means comprises two or more springs.

5. A valve according to any of claims 1 to 4, wherein the valve has an outer housing which, in use, is rigidly attached to the valve seat, the first and second members of the valve member sliding therein, with the second member having a correspond stop member on the valve housing for limiting movement thereof in a direction away from the sealing seat.

6. A valve according to any of claims 1 to 5, wherein the ratio of the relative forces generated by the first an second biassing members is in the range of 20:1 to 4:1.

7. A valve according to any preceding claim, wherein the ratio of the relative forces generated by the second biassing members in the region of 8:1 to 6:1.

8. A valve according to any preceding claim, wherein the first valve member comprises a sealing component formed from a disc having a sealing rib formed thereon.
